# EUROPEAN PATENT SPECIFICATION

(11) **EP 2 463 240 B1**
(45) Date of publication and mention of the grant of the patent: **19.08.2015**
(21) Application number: 10193889.2
(22) Date of filing: 07.12.2010
(51) Int. Cl.: C02F 11/04, C02F 1/20, F23G 5/02, F23G 7/00, C02F 101/30

(54) **Installation and process for recovering methane from a liquid effluent**
Anlage und Verfahren zur Gewinnung von Methan aus einer Flüssigkeit
Installation et procédé de récupération de méthane d'un effluent liquide

(43) Date of publication of application: 13.06.2012
(73) Proprietor: Veolia Water Solutions & Technologies Support, 94417 Saint-Maurice Cedex (FR)
(72) Inventor: v.d. Lubbe, Jeroen, 2623 EW Delft (NL); Heffernan, Barry, 2611 NR Delft (NL)
(74) Representative: Jansen, Cornelis Marinus

(56) References cited:
- WO-A1-2005/113459
- WO-A1-2007/006480
- GB-A- 2 381 761
- Ken Hartley, Paul Lant: "Eliminating non-renewable CO2 emissions from sewage treatment: An anaerobic migrating bed reactor pilot plant study", Biotechnology and Bioengineering, vol. 95, no. 3 1 July 2006 (2006-07-01), pages 384-398, XP009166362, Retrieved from the Internet: URL:http://onlinelibrary.wiley.com/ [retrieved on 2013-01-18]
- N Matsuura et al: "Closed DHS system to prevent dissolved methane emissions as greenhousegas in anaerobic wastewater treatment by its recovery and biologicaloxidation", Water Science and Technology, vol. 61, no. 9 September 2010 (2010-09), pages 2407-2415, XP009166361, Retrieved from the Internet: URL:http://www.cabdirect.org [retrieved on 2013-01-18]

## Description

The invention relates to a reactor system for preparing biogas by anaerobic degradation of one or more organic substances and to a method for recovering methane from a liquid effluent from a reactor wherein a waste stream comprising one or more organic substances other than methane has been subjected to anaerobic degradation, which method is carried out using a reactor system according to the invention.

Biological waste treatment uses active biomass (bacteria) to convert the pollutants (organic substances) to harmless components.

Basically there are two types of bacteria that can perform this treatment. For so-called anaerobic treatment (without oxygen) a consortia of anaerobic bacteria convert pollutants substantially to methane and carbon dioxide, which will end up in the biogas.

In aerobic treatment the pollutants are converted under aerobic conditions to carbon dioxide and also for a considerable extend to new bacteria / biomass (surplus sludge) which needs then to be separated from the treated wastewater and processed separately.

Anaerobic processes utilise anaerobic bacteria to convert pollutants in wastewater and other waste streams to biogas (a gas mixture mainly comprising methane and carbon dioxide). Part of the produced methane dissorbs from the liquid phase and is collected in dedicated gas collection devices or in the reactor headspace of closed reactors.

Although it has been known for over two decades that aqueous effluents from anaerobic waste treatment processes may comprise considerable amounts of dissolved methane, at present (to the best of the inventors knowledge) this methane is not recovered from the effluent.

The inventors realised that the dissolved methane concentration in a liquid effluent stream of a waste treatment process may in particular be saturated with methane; it is contemplated that in some circumstances the liquid effluent may even be oversaturated with dissolved methane. In particular, the inventors contemplate that the dissolved methane concentration in a liquid effluent may be in the range of about 15-60 mg/l, depending on process conditions, such as reactor liquid height, operational pressure and liquid temperature. The inventors realised that in particular for (dilute) waste water streams, such as municipal sewage, this may account for up to about 40 % of the total methane production.

The inventors realised that the methane dissolved in the liquid effluent from anaerobic waste treatment process may be transferred to the atmosphere, where it is a far more potent green house gas than carbon dioxide. Thus, they realised that avoiding such transfer would be desirable in order to reduce carbon foot print of a process for anaerobically treating a waste stream

Further, the inventors realised that it would be advantageous to recover the dissolved methane gas from the liquid effluent and use it for energy production.

In particular, they realised it would be useful to provide a way to recover the dissolved methane gas (mainly) using standard equipment. i.e. equipment which already is required for a properly designed system for biological treatment of waste streams, to limit extra investment cost.

GB-A-2 381 761 describes an apparatus and method to remove methane from trade waste such as leachate from landfill sites so that the processed liquid may be safely disposed of into the sewage system.

Accordingly, it is an object of the invention to provide a method for recovering gaseous methane from a liquid effluent of a reactor wherein a waste stream has been subjected to an anaerobic degradation, whereby the methane gas can be used for a useful purpose, if desired, or at least be prevented from being emitted into the atmosphere.

It is a further object of the invention to provide a installation comprising a methane recovery system that can be used to recover methane dissolved in an liquid effluent from an anaerobic waste treatment reactor, whereby the methane can be used for a useful.

Accordingly, the invention relates to a reactor system according to claim 1. Further, the invention relates to a method according to claim 8.

Such a method is in particular suitable for being carried out using a reactor according to the invention.

Thus, the present invention provides an effective way to recover methane from the liquid effluent and at least substantially avoiding that the methane ends up in the atmosphere. This reduces the carbon footprint of the anaerobic degradation process.

Moreover, the methane may be recovered from the liquid effluent in such a manner that it can efficiently be used for energy production. It is contemplated that, in particular in case the waste stream that is subjected to anaerobic degradation comprises a relatively high water content (in particular as in waste water streams), the increase in energy production is considerable, in particular 10 % or more, more in particular 20 % to 50 % - compared to a conventional anaerobic process wherein only biogas collected as a gas from/or within the reactor wherein the degradation takes place is used for energy production.

As a further benefit of the invention, the removal of methane from the liquid effluent reduces the risk of explosion and/or risk of asphyxiation (the latter in particular in confined spaces), which may be important, e.g. in case the method of the invention is used as part of a water purification method. After all, if dissolved methane in aqueous liquid is allowed to accumulate in confined spaces (e.g. a sewer network) it may be a cause of explosions.

The term "or" as used herein is defined as "and/or" unless specified otherwise.

The term "a" or "an" as used herein is defined as "at least one" unless specified otherwise.

When referring to a noun (e.g. a compound, an additive, etc.) in the singular, the plural is meant to be included.

The composition of the combustion fuel or the part thereof that is obtained by recovering methane from the liquid effluent may vary with in wide ranges depending on the specific method of methane recovery and - if the recovery comprises venting with (ambient) air, on the applied ventilation rate. Depending on the technique used and the method conditions, the methane concentration in the gas phase that is obtained may be below the lower explosion limit for methane in the gas phase (for a methane-air mixture 5.1 vol % at 20°C or be at least at the lower explosion limit (preferably above the upper explosion limit of 15 vol%) for methane in the gas phase. In the former case, the gas phase comprising methane may in particular be used as combustion air (when a technique making use of air is used to recover the dissolved methane). Thus, it is still possible to recover the energy released by the oxidation of methane. Gas phase comprising methane in a concentration above the lower explosion limit, preferably above the upper explosion limit, may be used (as part of) combustion fuel for producing energy.

As used herein, 'combustion air' means a gas phase comprising oxygen in a suitable concentration to combust the methane collected in the reactor, nitrogen and optionally methane and carbon dioxide, which methane is generally present at a concentration below the lower explosion limit. In particular, combustion air may comprise 0-5 vol % methane, 0-10 vol % carbon dioxide, 60-80 vol % nitrogen, 10-21 vol % oxygen. Together, these gases usually form more than 95 vol % The balance - if any - is usually essentially formed by one or more gases that are usually present in air (notably one or more noble gases, water vapour, hydrogen sulphide gas).

As used herein, 'combustion fuel' means a gas phase comprising methane in a concentration above the lower explosion limit that is to be combusted. In particular, the combustion fuel may be biogas (collected as a gas phase in the anaerobic reactor, typically with a methane fraction comprising at least 50 vol % CH₄,which biogas may have been conditioned, in particular which may have been enriched in methane, for instance by removal of water, carbon dioxide and/or other undesired components. Further, a recovered gas phase comprising methane that has been transferred from the liquid effluent in accordance with the invention, which gas phase comprises methane in a concentration above the upper explosion limit may be used as combustion fuel.

For instance, in a specific embodiment, in particular an embodiment wherein a relatively high ventilation rate is applied, the part of the combustion fuel obtained by recovering methane from the liquid effluent, comprises, 15 - 30 vol % methane, 5 - 30 vol carbon dioxide, up to 65 vol % nitrogen and up to 18 vol % oxygen. This part of the fuel is usually mixed with biogas directly obtained from the anaerobic reactor, before being combusted.

In another specific embodiment, in particular an embodiment wherein a relatively low ventilation rate of air is applied, or wherein methane is recovered without using air is used for recovering methane (*e.g.* in an embodiment wherein methane is recovered by vacuum extraction), the part of the combustion fuel obtained may comprise more than 30 % methane, in particular 50-80 vol % methane, and more than 20 vol % carbon dioxide, in particular 20-50 vol % carbon dioxide. In such embodiment, the nitrogen concentration usually is 0-25 vol %. In such embodiment, the oxygen concentration usually is 0-5 vol %.

The waste stream may in particular be selected from the group of waste water streams, slurries, sludges, organic residues, fermentation residues.

The waste stream, such as the waste water stream, may be of municipal or industrial origin.

A method or system according to the invention is in particular considered advantageous for the treatment of a waste stream, wherein the liquid effluent predominantly consists of water (more than 50 wt. %, in particular at least 80 wt. %, more in particular 90 wt. % or more). The (solid) waste content may be 50 % or less, 20 % or less, 10 % or less or 2 % or less. The high water content generally means that the amount of methane that leaves the reactor as dissolved methane in the liquid effluent is relatively high, and thus that the benefit of recovering dissolved methane is generally relatively high as well.

The anaerobic degradation process may be any anaerobic degradation process for degrading an organic substance in a waste stream. Thus, the reactor system may be any reactor system for anaerobic degradation of organic substances In particular, such process may be carried out in a reactor selected from the group of upflow anaerobic sludge blanket reactors (UASB) expanded granular sludge blanket reactors (EGSB), internal circulation reactor (IC), fluidized bed reactors, anaerobic membrane bio reactors (MBR), contact process, ,completely mixed digesters, anaerobic baffled reactors and anaerobic filters. In a specific embodiment, the UASB reactor is a hydrolysis upflow sludge blanket (HUSB),

In particular, the reactor in a method or reaction system according to the invention may be an UASB reactor. Such reactors, and suitable ways to operate such reactors are generally known in the art. For instance, a UASB reactor or process may be used as described in WO 2005/095288 or WO 2007/078194.

Further information may also be found in Feasibility of the Upflow Anaerobic Sludge Blanket (UASB) process, Dr. Ir. G lettinga et al. Proceedings 1979 National Conference on Environmental Engineering, ASCE/ San Francisco, Ca/ July 9-11, 1979 and UASB process design for various types of wastewater. Lettinga et al. 1991, Water Science & Technology 24(8), 87-107

In Biological Wastewater Treatment Series - Volume 4 - Anaerobic reactors; IWA Publishing, Carlos Augusto de Lemos Chernicharo, ISBN 1 - 84339 164 3 and 13 - 9781843391647. the following systems for municipal sewage treatment are described: UASB, anaerobic filter, sludge digesters (one stage + two stage), contact process, baffled anaerobic reactor and also (industrial) the expanded granular sludge bed ractor (EGSB) and IC reactor

Specific to UASB reference is made to : Van Haandel and Lettinga, 1994; "Anaerobic sewage treatment", Wiley, UK

As to the HUSB: Wang Kaijun (Beijing Academy of Environ. Sci., Beijing 100037,P,R. China)Last A. R. M. Van der G. Lettinga (Depart. of Environ. Technology, Agricultural Univ. Biotechnion, Bomenweg 2, 6703 HD, Wageningen ,The Netherlands)
As to AnMBR referenced is made to: The First Two Years of Full-Scale Anaerobic Membrane Bioreactor (AnMBR) Operation Treating High-Strength Industrial Wastewater, Scott Christian, Shannon Grant, Peter McCarthy, Dwain Wilson, and Dale Mills.

The anaerobic reactor (used) in accordance with the invention may be open (at the top) or be essentially closed (except for dedicated inlets and outlets, in particular for introducing waste stream, for removing gas, for removing liquid effluent). A closed reactor has the advantage that contact with the atmosphere that would result in losses of methane to the environment is avoided or at least reduced. For instance the reactor may be a reactor tank. In a specific embodiment, the anaerobic reactor may be provided with an inlet for air for ventilating the headspace of the reactor. This may be ambient air.

The production of energy from methane usually comprises oxidation of methane. The oxidation may be carried out in a conventional way by combustion or burning.

A flare may be used for flaring-off the methane, whereby the methane is burnt. Thereby (predominantly) carbon dioxide, water and heat are formed. The heat is then generally dissipated to the atmosphere.

Advantageously, the oxidation of methane is used, not only to convert the methane but also to recover produced energy, such that the energy may be used for a useful purpose. The recovered energy may be in the form of electrical energy and/or in the form of heat, that can be used for heating an object or heat exchange medium. The electrical energy may be produced using equipment known *per se,* such as a gas motor, a gas turbine or the like. Optionally, this equipment is provided with means to produce heat, for instance by converting a gas motor into a Combined Heat and Power (CHP) generation unit. Dedicated heat production may for instance be accomplished in a gas boiler.

A gas turbine may advantageously be provided, as in addition to providing means to oxidise the methane, it can provide (part of) the driving force to transport gas phases through conduits of the reaction system. Further, turbines can be highly robust, thereby allowing the combustion of relatively impure gas phase comprising methane. Such impurities include water, carbon dioxide and/or sulphur compounds. This applies for both biogas and gas phase comprising methane obtained from the liquid effluent).

For the transfer of dissolved methane from the liquid effluent to the gas phase in principle any technique suitable to that purpose may be used.

In accordance with the invention, the transfer of dissolved methane to the gas phase will generally take place if the partial methane pressure (p^{CH4}) in the gas phase is lower than the product of the dissolved methane concentration (C^{CH4}) in the liquid effluent and the Henry coefficient for methane in the liquid effluent (kH^{CH4}). The value of the Henry coefficient that determines the solubility of the gas in water has been determined for various gases as a function of the temperature, for instance in Metcalf and Eddy, "Wastewater Engineering - Treatment and Reuse 2003, McCraw Hill publishing, pp 67, which also supplies a calculation method for the resulting equilibrium concentration on pp 65 - 69.

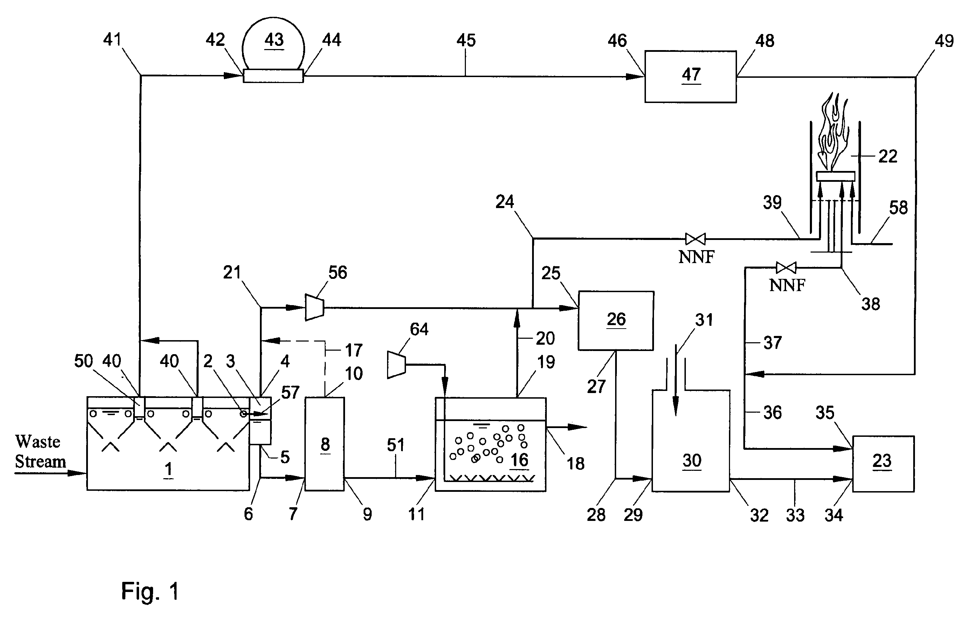

If desired, the methane concentration in the gas phase can be controlled at a concentration below the lower explosion limit, in particular if the gas phase is to be used as combustion air. Figure 1 shows an exemplary embodiment of a system for such a method (Hereafter also referred to as CASE 1). This option has the advantage that the (covered) anaerobic reactor is simultaneously ventilated.

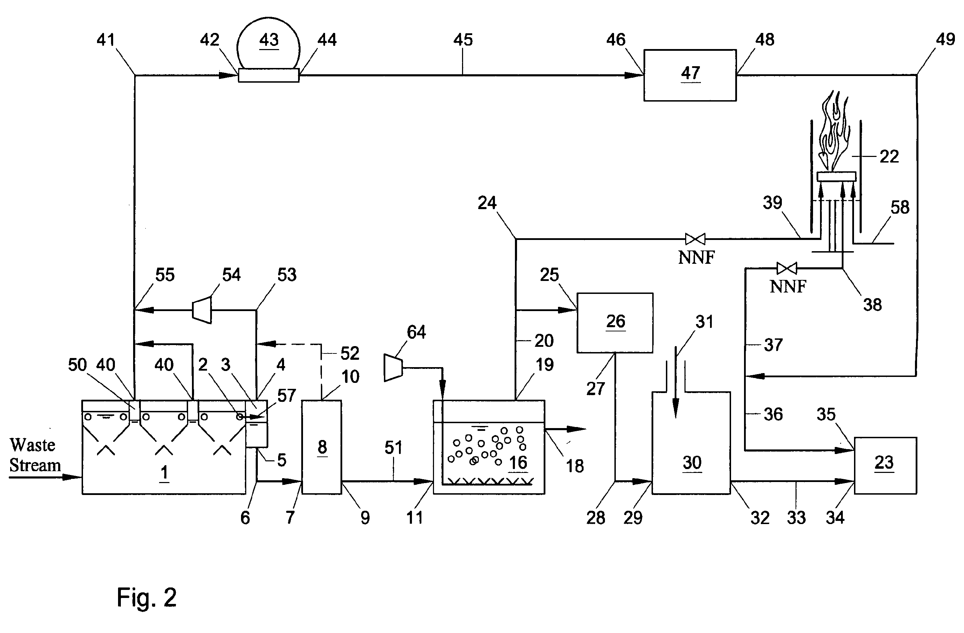

In the latter case (wherein introduction of ventilation air into the gas collection is minimized of prohibited), the methane concentration is above the lower explosion limit, and preferably at or above the upper explosion limit the gas phase comprising methane may be used as combustion fuel, for instance together with the biogas collected as a gas phase from the anaerobic reactor. An advantage of this specific embodiment, compared to the embodiment wherein the methane concentration is below the lower explosion limit, is a reduced gas flow and thus reduced gas treatment requirements. Figure 2 shows an exemplary embodiment of a system wherein part of the methane recovered from the liquid effluent can be combined with the biogas collected as a gas in the anaerobic reactor, such that it can be used as combustion fuel, whereas a second (diluted) methane stream is used as combustion air. (Hereafter also referred to as CASE 2).

### CASE 1

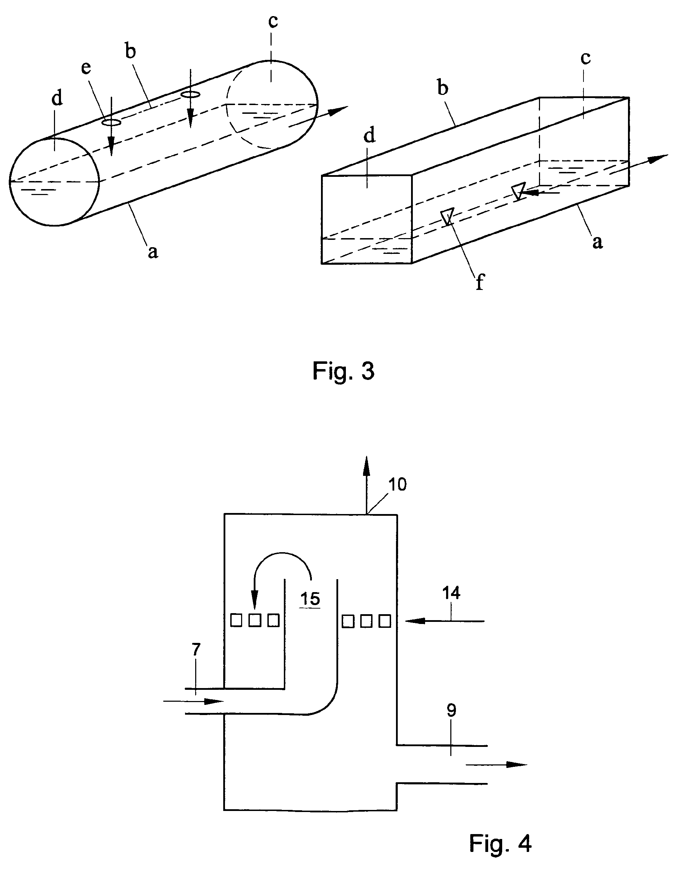

Figure 1 schematically shows a reactor system for a method wherein methane is transferred to a gas phase, which gas phase can subsequently be used as combustion air. The reactor 1 shown in Figure 1 is an upflow reactor, for instance an UASB reactor. If desired, another type of reactor may be provided. The internals of the reactor shown are only illustrative. collectors 2 are present for collecting liquid effluent (which may be submerged effluent pipes or collection channels, preferably with overflow weirs, as schematically shown in *e.g.* Figure 3. Preferred aspects of the collectors will be described below). Collectors 2 are - at least during use - in fluid communication with a collection sump 3. The collection sump 3 comprises an outlet 4 for gas phase (air + methane, suitable for use as combustion air) and an outlet 5 for liquid effluent.

Conduit 6 is provided to transport effluent from outlet 5 to one or more (optional) units for enhancing methane recovery from the liquid effluent. The one or more units may be provided in series or parallel. Figure 1 shows two units - 8 and 16 - for recovering methane. One of those may be omitted. Unit 8 and/or 16 may in particular be stripping devices wherein liquid phase can intimately be contacted with gas phase, such as air, thereby enhancing transfer of dissolved methane to the gas phase.

Unit 8 may in particular be a stripper designed to overflow effluent on a grid or mesh, *e.g.* as schematically shown in Figure 4, with grid/mesh 14 and overflow 15 or a vacuum extraction device. If unit 8 is present, outlet 10 is provided for the gas phase comprising recovered methane (combustion air). Unit 8 is provided with outlet 9, which is - at least during use - in fluid communication with conduit 51 for directing liquid effluent to unit 16 (via inlet 11), if a further unit is used, or alternatively conduit 11 may be provided to lead the effluent to a (conventional) post-treatment process or elsewhere.

In Figure 1, unit 16 is depicted as an aerated device. This device is shown in Figure 1 as a preferred example, only. Such device is in particular preferred because it is not only particularly effective for recovering methane, but also the aeration device may serve to oxidise undesired sulphur compounds, which may be present in the liquid effluent. Unit 16 is provided with aeration equipment 64 and an outlet for liquid effluent (typically to be lead to a (conventional) post-treatment process or elsewhere). Further, unit 16 comprises an outlet 19 for gas phase (air) comprising recovered methane (combustion air).

Flare 22 and/or unit 23 for recovering energy (such as chemical reaction energy released by combusting methane) comprise an inlet 38 for biogas collected from the anaerobic reactor 1. The collection system for the biogas can be a system known *per se.* In particular, the reactor system may be provided with a gas holder 43 for storing biogas which is connected to the biogas collectors 50 in the reactor 1 via outlets 40 for the biogas, conduit 41 and inlet 42. The gas holder is preferably present because variations of the methane (biogas) production due to peak loadings of the anaerobic reactors are avoided.

The gas holder 43 is provided with an outlet 44 through which the biogas can be transported to the flare 22 or the unit for recovering energy 23. Usually, the biogas from the gas holder 43 (or from the reactor is such holder is absent) is subjected to a gas treatment (to remove undesired components such as hydrogen sulphide and water. This can be done in a conventional manner. Accordingly, a conduit 45 is usually provided between outlet 44 and an inlet 46 of a biogas treatment facility 47. Biogas treatment facility 47 is provided with outlet 48, connected to a conduit 49, via which the (conditioned) biogas can be transported to the flare 22 (in Figure 1, via conduit 37, a valve and inlet 38) or the unit 23 for recovering reaction energy (in Figure 1, via conduit 36 and inlet 35).

The outlet(s) for gas phase (4, 8, 19) from the unit(s) for transferring dissolved methane (combustion air) to the gas phase are connected to conduit(s) (17, 20, 21) via which gas phase can be transported to the unit(s) for oxidising methane. The way in which the connections between conduits are shown in Figure 1 is exemplary. The conduit(s) may be provided with valves, as desired, in order to regulate the flow (preferred examples are shown in Figure 1 and are marked as NNF).

Figure 1 shows an embodiment, wherein both a flare 22 and a unit 23 for recovering reaction energy (formed by the oxidation of methane) are present. In a system respectively method according to the invention it is sufficient though that one thereof is present or used, respectively, for reducing the green house gas potential. If energy is to be recovered, a unit 23 for recovering reaction energy will be present. A flare 22 is preferably present as a back-up, for converting methane at any period wherein the capacity of unit 23 would be insufficient to convert all the combustion fuel.

The conduit(s) (17, 20, 21) comprising recovered methane (and typically air) may directly lead to inlet 39 for the flare 22 (In Figure 1 via conduits 24 and 39) . Usually a backpressure valve is present in order to regulate the flow to the flare 23. usually, this valve is closed during normal operation. The flare may advantageously be equipped with a device, to serve as an inlet for leading additional air (make-up air) into the flare. for instance a slitted skirt around the flare. A slitted skirt provides vertical elongate openings in a lower part of the flare, via which ambient air can flow into the flare.

In an embodiment having a unit 23 for recovering reaction energy, the system may be provided with a vent or combustion gas treatment unit 26, wherein one or more undesired components (*e.g.* water, hydrogen sulphide) can be removed from the gas phase comprising methane (combustion air). This unit is shown in Figure 1. This is an optional unit whose presence generally depends on the composition of the waste stream and the expected composition of the combustion air and furthermore depends on the requirements of the equipment vendor of the methane oxidation units. The skilled person will be able to decide on including this unit, based on his common general knowledge and the information provided in the present disclosure. An inlet 25 and an outlet 26 are provided. Outlet 26 is connected to a conduit 28 for the treated gas phase comprising recovered methane.

If biogas utilization is employed in unit 23, then a mixing chamber 30 may be present, wherein the gas phase comprising recovered methane (combustion air) can be mixed with make-up air to provide a sufficient quantity of oxygen for combustion of the biogas stream obtained as a gas phase from the reactor 1 (biogas that has been collected via collectors 40). The mixing chamber 30, *e.g.* a gas motor suction vessel in case unit 23 is a gas motor, is provided with an inlet 29 for the gas phase comprising methane (combustion air), an inlet 31 for make-up air and an outlet 32 for the combustion air mixture (comprising methane) obtained in the mixing chamber 30. The outlet 32 is connected with a conduit 33 for transporting the combustion air mixture into the unit 23 via inlet 34.

### CASE 2

Figure 2 schematically shows an embodiment wherein part of the recovered methane that is recovered in the effluent collection system up and until unit 8 (high methane content) is combined with the biogas collected as a gas in the reactor 1. Here, at least one of the outlets for gas phase from collection sump 3 (outlet 53) and the optionally present unit 10 (outlet 4), which in this embodiment preferably is a vacuum extraction device, is connected to a conduit system adapted to ultimately transport the gas phase comprising recovered methane to flare 22 or unit 23 for recovering reaction energy, in which flare 22 or unit 23 the gas phase can be used as combustion fuel. Figure 2 shows an advantageous design wherein conduits 52 and 53 for the gas phase are provided, which conduits lead to a compressor 54 from which compressor a conduit 55 extends via which the gas can be introduced in conduit 41. The remainder of the set-up in Figure 2 essentially corresponds to the set-up in Figure 1. If the top op the reactor is closed (covered), then preferably a system for ventilation gas treatment is provided , in particular if the recovered gas phase comprising methane is to be used as part of the combustion fuel. This could be any commercially available system available, such as a chemical scrubbers or oxidation units, a bioscrubber, an activated carbon unit *etc*.

It is observed that in principle, at least in some embodiments, the unit 16 may be omitted, namely in those embodiments where sufficient dissolved methane is recovered from the liquid effluent. However, especially if the liquid effluent comprises one or more undesired sulphur compounds, an aeration device is usually present and the off-gas from the aeration device may be provided with a system to introduce the off-gas into the flare or unit 23, where it can be used as combustion air. In general, it is contemplated that thereby the recovery of methane is improved, as aeration is considered a highly effective technique to remove methane from the liquid effluent. The gas phase containing methane taken from the aeration device may be treated further, in particular be dried and/or subjected to a H₂S removal step (if a substantial amount of H₂S is present), before further use before being discarded. It may in particular be used as combustion air, as discussed in Figure 1.

Suitable collection channels include pipes and covered gutters. The collection channels 2 are usually enclosed structures. By having enclosed collection channels the risk of a substantial loss of the methane into the atmosphere is reduced., Thus, the contents of the channels are essentially surrounded by sides(s) α*, e.g.* as shown in both cylindrical channels depicted in Figure 3, with the proviso that openings e, *f* for introducing fluid (liquid effluent and/or gas phase) into the channels may be provided in (one or more of) the side(s). The openings *e*, *f* are present in addition to an outlet for liquid effluent (and gas phase if present in the channels) *d*, generally present at an extremity of the channel. These openings typically overflow into a common effluent header (enclosed channel or pipe, not shown in Figures 1, 2 and 3), which in turn overflows into the collection sump 3. The openings may be perforations or notches (*e.g.* triangular notches).

The openings *e*, *f* are generally provided along at least part of a wall α of the channel (in particular along at least part of the wall defined by the surface along the generating line *b* of the channel). End c of the channel may be closed or provide an inlet for gas phase, which is optionally present. Such dedicated inlet (not shown in Figure 3) may in particular be provided with a valve so that gas flow through the channel can be regulated.

In a specific embodiment, the gas phase introduced into the collection channel may be taken from the headspace of the anaerobic reactor (the space above the liquid level in the reactor). In particular, in an embodiment wherein the headspace is ventilated with air, the gas phase in the headspace may have a relatively low methane content, and thus transfer of methane from the liquid effluent to the gas phase tends to take place. The thus obtained gas phase (comprising air and methane) may in particular be used as combustion air.

During use, the collection channels may in principle be fully filled with liquid effluent. Preferably, during use the collection channels are (on average) only partially filled with effluent, in particular for up to 75 %, *e.g.* for 5-50 %. This allows for a balanced effluent withdrawal over the reactor for an advantageous treatment efficiency. As will be understood by the skilled person, the effluent may be withdrawn continuously or intermittently. Accordingly, the flow through the collection channels may from time to time be zero, and thus the collection channels may be empty from time to time.

Also, by contacting the liquid effluent in the collection channels (or elsewhere in a system or method of the invention) with a gas phase that is free of methane or has a relatively low methane content, it is possible to transfer dissolved methane from the liquid phase in the collection channel.

The collection channels are usually positioned such that the openings for the liquid effluent are below the liquid level in the reactor, at least for part of the duration of operating the anaerobic reactor. In particular in case of a UASB reactor, if a submerged pipe is used, the collection channels are advantageously positioned close to the surface of the liquid phase in the reactor, in particular 0-100 mm, more in particular 0-80 mm below said surface. In the case of a collection channel equipped with a v-notched overflow weir the liquid level typically varies between 0 - 50 mm above the base of the overflow weir.

The diameter of the collection channels, in particular of effluent collection pipes can be chosen within wide ranges, *e.g.* in the range of 150 to 300 mm.

The openings have dimensions suitable to introduce liquid into the channels. In particular these openings may have a diameter in the range of 15 to 40 mm.

The liquid flow rate through the openings in the collection channels may suitably vary in a wide range. Usually, the velocity varies between 0 and 1.5 m/s. Preferably, the average velocity during use is between 0.2 and 1.25 m/s, in particular between 0.4 and 1.0 m/s, more in particular between 0.5 and 0.7 m/s.

In an embodiment, wherein it is undesired to introduce a substantial amount of gas (air) from the headspace of the anaerobic reactor 1 into the collector 2, the collector may advantageously be adapted with means to prevent or at least reduce introduction of gas into the channels.

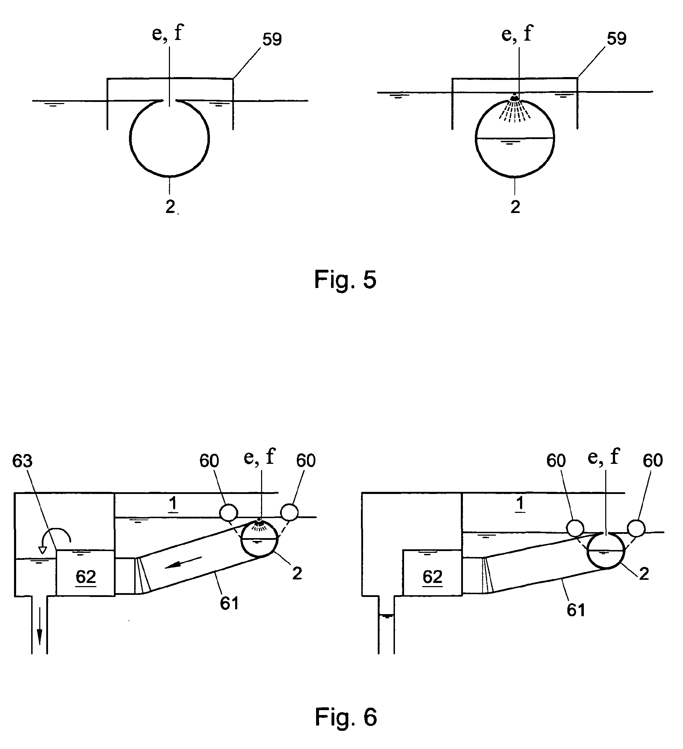

In order to accomplish this, the collector may be provided with a water lock *e.g.* as schematically shown in Figure 5. The water lock may be a cover 59 over the collection channel 2, with sides extending below the minimum liquid level during use of the reactor 1 and below the opening(s) *e*, *f* in the collection channels 2. The left-hand figure shows a situation wherein no effluent is withdrawn. In the absence of cover 59 gas would flow into the channel 2, however the presence of the cover prevents a substantial gas flow into the channel 2. The right-hand figure shows the situation during normal operation wherein liquid flows into the channel 2.

Another way to avoid undesired introduction of gas is shown in Figure 6 is to provide the collector 2 with means to adapt the level of the openings in the collectors with alteration in the liquid level in the anaerobic reactor 1, *e.g.* with floater 60. The outlet for liquid from collector 2 is a flexible channel 61 via which the effluent flows into effluent channel 62. From there, it usually flows to the collection sump. In the left-hand figure, representing normal operation, the liquid level in the collector 2 is above the overflow liquid level 63 of effluent channel 62, whereby effluent will be withdrawn from the reactor 1. In the right-hand Figure the liquid level in the reactor 1 is lowered so far that the liquid level in the collector 2 is at the same height as the overflow level 63 in effluent channel 62, whereby no effluent is withdrawn from reactor 1.

As illustrated in Figures 1 and 2, the system of the invention may be provided with a collection sump 3. Such sump is advantageously provided with an outlet 4 for gas phase (which gas phase may be referred to as anaerobic reactor vent gas), in addition to an outlet 5 for liquid effluent. Thus, in the collection sump the gas phase can be separated from the effluent, if in a method of the invention liquid effluent is collected from the anaerobic reactor 1 together with a gas phase.

The liquid effluent is introduced into the collection sump 3 from collector(s) 2, via inlet 57 (see *e.g.* Figure 1). An intermediate conduit (such as effluent channel 62 as shown in Figure 6) may be present between collector(s) and inlet 57. Advantageously, the liquid effluent is introduced into the sump 3 above the liquid level, allowing a free fall of the introduced liquid. This increases contact with the gas phase and thus transfer of methane.

The collection sump 3 is optionally provided with a device for enhancing the release of dissolved methane into the gas phase. Such devices include in particular devices for causing turbulences in the liquid phase in the collection sump, *e.g.* a series of cascades, or several weir meshes. The gas phase can be drawn from the collection sump with a gas ventilator or compressor or the like (in particular in the above described case 1, shown as item 56 in Figure 1). If desired, the collection sump is provided with a ventilating system for introducing air into the collection system. Thereby transfer of methane from the liquid effluent to the gas phase is generally improved. In particular if the headspace above the anaerobic reactor is ventilated with air, gas may be taken from the headspace to be contacted with the liquid effluent.

Alternatively, in particular in an embodiment referred to above as Case 2, or illustrated by Figure 2, transfer of methane from the liquid effluent to the gas phase may be improved by operating the collection sump under sub-atmospheric pressure conditions (employing vacuum extraction). In this embodiment, the obtained gas phase may in particular be suitable as combustion fuel.

Depending on the methane and oxygen concentration in the gas phase, the gas phase may be used as combustion air, or as combustion fuel (with the biogas collected as a gas phase in reactor 1). If desired, the system may be provided with a sensor for monitoring methane, and if desired oxygen, and a valve that allows switching of the gas flow between the stream to be used for combustion fuel (*e.g.* via conduits 53, 55, 41 *etc.* as shown in Figure 2) and the stream to be used for combustion air (*e.g.* via conduits 6, 20, *etc* as shown in Figure 1).

As illustrated in Figures 1 and 2 one or more methane gas-recovery devices may be provided (in the conduit between 1 and optionally 16), such as a methane stripping device. A preferred stripping device is schematically shown in Figure 4. Such device is known as a vacuum degasser.

Suitable ways to operate such a device may for instance be based on Handleiding voor het gebruik van water in de industrie, 1971, Vereniging krachtwerktuigen, Kluwer, ISBN 90 201 059 30, sectie 6.9 uitdrijven van gassen, pp 429 - 450 (in Dutch).

Other technologies that could be used include venturi strippers (e.g as described in GB 2381 761 A) or degassing membranes. Such membranes are commercially available, e.g. from Liqui-Cell:
(http://www.liqui-cel.com/applications/other-gas-transfer.cfm).

Liquid effluent leaving the final methane gas recovery unit, may be subjected to a post-treatment step or lead to the final disposal.

Preferably, the system of the invention is provided with an reactor for post-treatment of the anaerobic effluent fitted with an aeration device. The aeration device is advantageously used, not only to recover dissolved methane, but also to oxidise one or more sulphur compounds (organic sulphur compounds, H₂S). The aeration device and operating conditions can be chosen based on technology known *per se, e.g.* as described in Metcalf and Eddy, "Wastewater Engineering - Treatment and Reuse" 2003, McCraw Hill publishing , section 5-12 Aeration systems pp 430 - 456.

The gas phase obtained by subjecting the liquid effluent to aeration-is used as combustion air for combusting biogas collected (as a gas phase) from the anaerobic degradation process.

In an embodiment wherein the reaction system of the invention is designed to have a gas phase comprising air and methane to be used as combustion air for a unit for combusting biogas, in particular a unit wherein the reaction heat released by the combustion is utilised for energy or heat generation, the system is preferably provided with a combustion air inlet tank, said tank further comprising an inlet for (ambient) air, via which inlet (ambient) air can be introduced in the combustion air inlet tank at times when there is insufficient combustion air provided by the gas phase comprising air and methane for combusting all the biogas that is to be used for energy production. Air introduced via this inlet may also be referred to as make-up air. The tank further comprises an outlet for combustion air via which outlet the combustion air can be directed to a combustion unit wherein the biogas is to be combusted, thereby producing energy.

In an embodiment wherein, the gas phase comprising air and methane is to be used as combustion air in a flare wherein biogas is to be flared off, the flare is preferably provided with an inlet for additional air (make-up air, item 58 in Figure 1 and in Figure 2), to be introduced into the flare at times when insufficient air is provided via the gas phase comprising air and methane in order to ensure full combustion of the biogas. Such flare comprises a burner placed inside an encasing (closed flare), which encasing may basically be a pipe. The air is allowed to freely enter from slotted openings in a lower end of the encasing, sufficient to let in the required quantity of air if there is no or insufficient supply of combustion air.

In an advantageous embodiment, a vacuum extraction device is provided for methane recovery. In this device the effluent can be subjected to vacuum extraction, whereby methane is transferred from the effluent to the gas phase. Vacuum extraction is particularly suitable to obtain a gas phase with a high methane content, usually above the lower explosion limit, in particular above the higher explosion limit, more in particular a methane content in the range of 15 to 80 vol %. Thus, such a technique is in particular suitable to provide a gas phase that can be used as combustion fuel. Vacuum extraction comprises subjecting the liquid effluent to a sub-atmospheric pressure, usually a pressure of 0.8 bara or less, in particular a pressure of 0.5 bara or less. For practical reasons, the sub-atmospheric pressure may in particular be 0.1 bara or more, or 0.25 bara or more, especially in an embodiment comprising (the use of) a UASB reactor.

Preferably, liquid effluent from the vacuum extraction step is subjected to aeration, for further recovery of dissolved methane in the liquid effluent from the vacuum extraction step.

The reactor system (used) according to the invention has a conduit between the outlet for biogas produced in the anaerobic reactor and the unit for producing energy from methane, which conduit comprises a gas flow meter and optionally a methane sensor. Such flow meter or sensor may for instance be provided in any of conduits 41, 45 and 49 as shown in Figure 1 and 2) for transporting biogas from the anaerobic reactor (1) to a flare (22) or unit for recovering energy (23).

The presence of such a flow meter, and optionally methane sensor, is in particular advantageous for an improved regulation of the combustion air flow rate into the unit for producing energy.

On the basis of the flow rate, an estimated oxygen (air) requirement for combustion of the biogas can be determined, and the flow rate of combustion air can be regulated accordingly. The presence of a flow rate meter in the conduit for transporting biogas leading from the anaerobic reactor (41) is advantageous since it allows direct feedback to the production rate of methane in the anaerobic reactor. A flow meter in a conduit for transporting biogas more downstream thereof (a conduit 45 leading from the biogas storage vessel 44 or a conduit 49 from the biogas treatment unit) is advantageous since it measures the actual flow rate towards the flare 22 and/or energy recovery unit 23, thereby providing more instant data to regulate the combustion air flow rate.

In particular when operating under steady state conditions, the composition of the biogas is relatively stable. Thus, a sufficiently accurate determination of the required combustion air flow rate can usually be made without needing to monitor the methane concentration in the biogas. In an advantageous embodiment, one or more of the conduits (provided with a flow meter) comprise a methane sensor, which allows for an increased accuracy in the determination of the required combustion air flow rate, as in such embodiment fluctuations in the methane concentration can be taken into account.

Further, the reactor system (used) according to the invention comprises a conduit for transporting gas phase from the methane gas-recovery unit to the unit for producing energy from methane which conduit comprises a gas flow meter and optionally a methane sensor.

In case (part of) the combustion air comprises methane (recovered from the liquid effluent), the concentration of methane in the combustion air can be taken into account as well, when determining the required combustion air flow rate. A flow rate meter can therefore be provided in a conduit for transporting gas phase comprising recovered methane from any methane recovery unit. Under steady state conditions, the methane concentration is relatively stable, but - if desired - a methane sensor may be provided as well, whereby fluctuations in the methane concentration can be taken into account. A further advantage of a methane sensor in a conduit for transporting gas phase comprising recovered methane from any methane recovery unit is related to safety. Such sensor can be used to monitor whether the methane concentration at any point in time reach a value between the lower and upper explosion limit, and thus measures can be taken to bring the methane concentration outside this range, thereby avoiding a potential explosion hazard. It is also possible to provide an oxygen sensor for this purpose.

Next, the use of flow meters in a method wherein the combustion air flow rate is regulated is exemplified with reference to the above mentioned Cases 1 and 2 and Figures 1 and 2.

### CASE 1 (use of extracted vent gas and pre-aeration off-gas as combustion air)

A flow meter may be provided in at least one of the conduits 41, 45 and 49. Based on the biogas flow rate to the device for producing energy (a combustion device like a flare, gas motor *etc*), an estimated oxygen (and air) requirement for combustion is calculated.

A certain multiplier value (> 1.0) (adjustable by operations supervisor) can be added to compensate for the additional oxygen demand resulting from the presence of methane in the combustion air and for the reduced oxygen content (compared to air). This relates to both the combustion air from the effluent collection system 3 and the off gas from the pre-aeration unit (16).

The air flow rate to the pre-aeration unit is measured as well (in conduit from 64 to 16). Based on the calculated oxygen (air) demand and the supply to unit 16, the difference serves as a set-point for the vent gas extraction flow (21 + 17). If there is no waste stream flow to the reactor system (and thus no biogas production), ventilation normally is continued at relatively low rate, compared to periods where there is a waste stream flow. After treatment in a vent gas treatment unit, the treated vent gas is then usually discharged to the atmosphere.

### Case 2 (use of extracted vent gas as biogas (combustion fuel) and use of pre-aeration off-gas as combustion air)

Compared to Case 1, the quantity of gas phase obtained in a methane recovery unit that is to be used as combustion air is generally much smaller. If a set-up as shown in Figure 2 is used, then ideally only the off-gas from unit 16 is used as combustion air. Operation of this unit is usually not depending on the actual methane combustion rate, as this unit is usually also used for sulphide oxidation, which normally proceeds throughout the use of the method. At moments where there is no methane combustion, the off-gas may be treated in a vent gas unit only and discharged to the atmosphere.

At times when the waste stream flow into the reactor is stopped or becomes too low, the liquid level in the reactor will decrease and air might enter into the effluent collection system, for instance trough inlets e, f in Figure 3. The entry of air into the biogas line is undesired as it might result in the formation of an explosive mixture between methane and oxygen. Therefore it is preferred that either provisions are taken to prevent such air entry into the effluent collection system (for example as shown in Figures 5 and 6) or, if the above provisions (Figures 5 and 6) are not installed, that at low or no flow the extraction of vent-gas from conduit 4 and the injection into biogas conduit 41 is ceased or alternatively, is routed to vent gas treatment and then discharged to the atmosphere.

Such provision can be taken at a central level (*i.e*. below a certain flow rate setpoint) or at a reactor level (*e*.*g*. using a simple level switch (like the float valve or ball cock used in toilet flush reservoirs) that stops vent gas extraction at a certain minimum level. As a secondary safeguard measure either methane sensors or oxygen sensors can be installed in conduit 53, 55 or 41 that will be triggered at a certain setpoint and stop the injection of the vent gas into the biogas conduit 41.

Methane recovery from unit 8 can continue also when the waste stream flow into the reactor is stopped or becomes too low, as water locks are usually provided that prevent entrance of air into this unit.

## Claims

1. Reactor system for preparing biogas by anaerobic degradation of one or more organic substances, the system comprising a reactor (1), which reactor is provided with a biogas collection system and an outlet (40) for biogas produced in the reactor, with effluent withdrawal means for withdrawing liquid effluent from the reactor (1), and with a methane gas-recovery unit (8/16) for recovering methane gas from the liquid effluent, the methane gas-recovery unit comprising an inlet (7/11) for the liquid effluent, which inlet(7/11) is in fluid communication with the effluent withdrawal means, the methane gas-recovery unit further comprising an outlet (10/19) for a gas phase comprising methane, and an outlet (9/18) for a liquid effluent, wherein the effluent withdrawal means comprise collection channels (2), the channels (2) having openings (e, f) for introducing liquid effluent into the collection channels (2), and an outlet (d) for the liquid effluent, which outlet is in fluid communication with the methane recovery unit, the collection channels (2) comprising an inlet for a gas phase, which inlet may be one or more openings for liquid effluent (e, f) or a separate inlet (c), wherein the reactor system has a conduit between the outlet for biogas produced in the reactor and the unit for producing energy from methane, which conduit comprises a gas flow meter, and wherein the reactor system comprises a conduit for transporting the gas phase from the methane gas-recovery unit to the unit for producing energy from methane, which conduit comprises a gas flow meter.

2. Reactor system according to claim 1, wherein the outlet (10/19) for a gas phase of the methane gas-recovery unit and the gas outlet (40) for biogas are adapted to be in fluid communication with a unit (23) for producing energy from methane.

3. Reactor system according to claim 2, wherein a conduit (41) is provided between the outlet for biogas produced in the anaerobic reactor (1), and the unit (23) for producing energy from methane, which conduit (41) comprises a gas flow meter and optionally a methane sensor.

4. Reactor system according to claim 2 or 3, wherein a conduit (52/20) for transporting gas phase is present between the methane gas-recovery unit (8/16) and the unit (23) for producing energy from methane which conduit comprises a gas flow meter and optionally a methane sensor.

5. Reactor system according to any of the claims 1-4 , wherein the methane gas-recovery unit (8/16) comprises a device selected from the group of aeration devices, gas stripping devices and gas vacuum extraction devices.

6. Reactor system according to any of the claims 1-5, wherein the reactor is selected from the group of upflow anaerobic sludge blanket reactors (UASB) expanded granular sludge blanket reactors (EGSB), internal circulation reactor (IC), fluidized bed reactors, anaerobic membrane bio reactors (MBR), contact process, ,completely mixed digesters, anaerobic baffled reactors and anaerobic filters.

7. Reactor system according to claim 6, wherein the reactor is an UASB reactor.

8. Method for recovering methane from a liquid effluent of a reactor (1), wherein a waste stream comprising one or more organic substances has been subjected to an anaerobic degradation process, in which reactor (1) biogas, comprising methane, has been produced from said one or more organic substances, the liquid effluent comprising dissolved methane, the method comprising transferring dissolved methane from the effluent to a gas phase and using the methane to produce energy,
wherein the effluent from the reactor (1) is passed through a collection channel (2), the collection channel (2) comprising liquid effluent and a gas phase, which gas phase comprises air, the channel having openings (e/f) via which openings the liquid effluent is introduced into the collection channel (2) and contacted with the gas phase, in which collection channel methane is transferred from the effluent to the gas phase, and wherein the gas phase comprising air and methane is used as combustion air for combusting biogas obtained from the anaerobic degradation process, which method is carried out using a reactor system according to any of the claims 1-7.

9. Method according to claim 8, wherein the gas phase and the effluent, which have passed through the collection channel (2), are introduced into a collection sump (3), in which the gas phase is separated from the effluent.

10. Method according to any of the claims 8-9, wherein the effluent is introduced into a gas stripping device (8/16), wherein methane is stripped from the effluent, whereby the methane is transferred from the liquid effluent to the gas phase.

11. Method according to any of the claims 8-10, wherein the transferring comprises subjecting the liquid effluent to aeration, thereby forming a gas phase comprising air and methane.

12. Method according to any of the claims 8-11, wherein the gas phase comprising air and methane that is to be used as combustion air is introduced into a combustion air inlet tank (30), said tank (30) further comprising an inlet (31) for ambient air, via which inlet (31) ambient air is introduced in the combustion air inlet tank (30) at times when there is insufficient combustion air provided by the gas phase comprising air and methane for combusting all the biogas that is to be used for energy production, the tank (30) further comprising an outlet (32) for combustion air via which outlet the combustion air is directed to a combustion unit (23) wherein the biogas is combusted, thereby producing energy.

13. Method according to any of the claims 8-12, wherein the effluent is subjected to vacuum extraction, whereby methane is transferred from the effluent to the gas phase.

14. Method according to claim 12 or 13, wherein the gas phase comprising the transferred methane is combined with biogas that has been collected as a gas phase from the reactor and then used for energy recovery or flared off.

15. Method according to any of the claims 8-14, wherein the reactor is selected from the group of upflow anaerobic sludge blanket reactors (UASB) expanded granular sludge blanket reactors (EGSB), internal circulation reactor (IC), fluidized bed reactors, anaerobic membrane bio reactors (MBR), contact process, ,completely mixed digesters, anaerobic baffled reactors and anaerobic filters.

16. Method according to any of the claims 8-15, wherein water content in the liquid effluent is at least 90 wt. %.

## Patentansprüche

1. Reaktorsystem zur Herstellung von Biogas durch anaeroben Abbau von einer oder mehreren organischen Substanzen, das System umfassend einen Reaktor (1), der versehen ist mit einem Biogas-Sammelsystem und einem Auslass (40) für in dem Reaktor produziertes Biogas, mit Ablaufabzugsmitteln zum Abziehen von flüssigem Ablauf von dem Reaktor (1) und mit einer Methangas-Rückgewinnungsanlage (8/16) zum Rückgewinnen von Methangas aus dem flüssigen Ablauf, wobei die Methangas-Rückgewinnungsanlage einen Einlass (7/11) für den flüssigen Ablauf umfasst, wobei der Einlass (7/11) in Fluidkommunikation mit den Ablaufabzugsmitteln ist, wobei die Methangas-Rückgewinnungsanlage ferner einen Auslass (10/19) für eine Gasphase, die Methan umfasst, und einen Auslass (9/18) für einen flüssigen Ablauf umfasst, wobei die Ablaufabzugsmittel Sammelkanäle (2) umfassen, welche Kanäle (2) Öffnungen (e, f), um flüssigen Ablauf in die Sammelkanäle (2) einzuleiten, und einen Auslass (d) für den flüssigen Ablauf aufweisen, wobei der Auslass in Fluidkommunikation mit der Methan-Rückgewinnungsanlage ist, wobei die Sammelkanäle (2) einen Einlass für eine Gasphase umfassen, welcher Einlass eine Öffnung oder mehrere Öffnungen für flüssigen Ablauf (e, f) oder ein separater Einlass (c) sein kann, wobei das Reaktorsystem eine Leitung zwischen dem Auslass für das im Reaktor produzierte Biogas und der Anlage zum Produzieren von Energie aus Methan hat, wobei die Leitung einen Gasstrommeter umfasst, und wobei das Reaktorsystem eine Leitung zum Transportieren der Gasphase von der Methangas-Rückgewinnungseinheit zu der Anlage zum Produzieren von Energie aus Methan umfasst, wobei die Leitung einen Gasstrommesser umfasst.

2. Reaktorsystem nach Anspruch 1, wobei der Auslass (10/19) für eine Gasphase der Methangas-Rückgewinnungseinheit und der Gasauslass (40) für Biogas angepasst sind, um in Fluidkommunikation mit einer Einheit (23) zum Produzieren von Energie aus Methan zu sein.

3. Reaktorsystem nach Anspruch 2, wobei eine Leitung (41) zwischen dem Auslass für in dem anaeroben Reaktor (1) produziertes Biogas und der Einheit (23) zum Produzieren von Energie aus Methan bereitgestellt ist, wobei die Leitung (41) einen Gasstrommesser und optional einen Methansensor umfasst.

4. Reaktorsystem nach Anspruch 2 oder 3, wobei eine Leitung (52/20) zum Transportieren der Gasphase zwischen der Methangas-Rückgewinnungsanlage (8/16) und der Einheit (23) zum Produzieren von Energie aus Methan vorhanden ist, wobei die Leitung einen Gasstrommesser und optional einen Methansensor umfasst.

5. Reaktorsystem nach einem der Ansprüche 1-4, wobei die Methangas-Rückgewinnungsanlage (8/16) eine Vorrichtung umfasst, ausgewählt aus der Gruppe von Belüftungsvorrichtungen, Gas-Strippungsvorrichtungen und Gas-Vakuumextraktionsvorrichtungen.

6. Reaktorsystem nach einem der Ansprüche 1-5, wobei der Reaktor ausgewählt ist aus der Gruppe von UASB (Upflow Anaerobic Sludge Blanket) Reaktoren, EGSB (Expanded Granular Sludge Blanket) Reaktoren, IC (Internal Circulation) Reaktoren, Flüssigbettreaktoren, anaeroben MBR (Membrane Bio Reactor) Reaktoren, Kontaktprozess, vollständig gemischten Digestern, ABR (Anaerobic Baffled Reactor) Reaktoren und anaeroben Filtern.

7. Reaktorsystem nach Anspruch 6, wobei der Reaktor ein UASB-Reaktor ist.

8. Verfahren zur Rückgewinnung von Methan aus einem flüssigen Ablauf eines Reaktors (1), wobei ein Ablaufstrom, der einen oder mehr organische Stoffe umfasst, einem anaeroben Abbauprozess unterzogen wurde, in welchem Reaktor (1) Biogas, das Methan umfasst, aus dem einen oder mehr organischen Stoffen produziert wurde, wobei der flüssige Ablauf gelöstes Methan enthält, das Verfahren die Übertragung des gelösten Methans aus dem Ablauf in eine Gasphase und die Verwendung des Methans zur Energieproduktion umfasst,
wobei der Ablauf von dem Reaktor (1) durch einen Sammelkanal (2) geführt wird, wobei der Sammelkanal (2) flüssigen Ablauf und eine Gasphase enthält, wobei die Gasphase Luft enthält, wobei der Kanal Öffnungen (e/f) hat, über die der flüssige Ablauf in den Sammelkanal (2) eingeleitet und mit der Gasphase in Berührung gebracht wird, in welchem Sammelkanal Methan aus dem Ablauf in die Gasphase übertragen wird, und wobei die Gasphase Luft umfasst, und das Methan als Verbrennungsluft zum Verbrennen von Biogas, erhalten aus dem anaeroben Abbauprozess, verwendet wird, wobei das Verfahren unter Verwendung eines Reaktorsystems nach einem der Ansprüche 1-7 ausgeführt wird.

9. Verfahren nach Anspruch 8, wobei die Gasphase und der Ablauf, die den Sammelkanal (2) passiert haben, in einen Sammelbehälter (3) eingeleitet werden, in dem die Gasphase von dem Ablauf getrennt wird.

10. Verfahren nach einem der Ansprüche 8-9, wobei der Ablauf in eine Vorrichtung (8/16) zum Strippen von Gas eingeleitet wird, wobei Methan aus dem Ablauf abgezogen wird, wobei das Methan aus dem flüssigen Ablauf in die Gasphase übertragen wird.

11. Verfahren nach einem der Ansprüche 8-10, wobei die Übertragung das Aussetzen des flüssigen Ablaufs an Belüftung umfasst, wodurch eine Gasphase, die Luft und Methan umfasst, gebildet wird.

12. Verfahren nach einem der Ansprüche 8-11, wobei die Gasphase, die Luft und Methan zur Verwendung als Verbrennungsluft umfasst, in einen Verbrennungsluft-Einlasstank (30) eingeleitet wird, wobei der Tank (30) ferner einen Einlass (31) für Umgebungsluft umfasst, über welchen Einlass (31) Umgebungsluft zu Zeiten, in denen nicht genug Verbrennungsluft von der Gasphase, die Luft und Methan enthält, bereitgestellt wird, um das gesamte Biogas, das für die Energieproduktion verwendet werden soll zu verbrennen, in den Verbrennungsluft-Einlasstank eingeleitet wird, wobei der Tank (30) ferner einen Auslass (32) für Verbrennungsluft umfasst, über welchen Auslass die Verbrennungsluft zu einer Verbrennungseinheit (23) geleitet wird, in der das Biogas verbrannt wird, um so Energie zu produzieren.

13. Verfahren nach einem der Ansprüche 8-12, wobei der Ablauf einer Vakuumextraktion unterzogen wird, wobei Methan aus dem flüssigen Ablauf in die Gasphase übertragen wird.

14. Verfahren nach Anspruch 12 oder 13, wobei die Gasphase, die das übertragene Methan umfasst, mit Biogas, das als eine Gasphase von dem Reaktor gesammelt wurde, kombiniert und dann zur Energierückgewinnung verwendet oder abgefackelt wird.

15. Verfahren nach einem der Ansprüche 8-14, wobei der Reaktor ausgewählt ist aus der Gruppe von UASB (Upflow Anaerobic Sludge Blanket) Reaktoren, EGSB (Expanded Granular Sludge Blanket) Reaktoren, IC (Internal Circulation) Reaktoren, Flüssigbettreaktoren, anaeroben MBR (Membrane Bio Reactor) Reaktoren, Kontaktprozess, vollständig gemischten Digestern, Anaerobic Baffled Reaktoren und anaeroben Filtern.

16. Verfahren nach einem der Ansprüche 8-15, wobei der Wasseranteil in dem flüssigen Ablauf mindestens 90 Gew.-% ist.

## Revendications

1. Système de réacteur destiné à la préparation de biogaz par dégradation anaérobie d'une ou plusieurs substances organiques, le système comprenant un réacteur (1), lequel réacteur est doté d'un système de collecte de biogaz et d'une sortie (40) pour le biogaz produit dans le réacteur, de moyens de prélèvement d'effluent pour prélever de l'effluent liquide du réacteur (1), et d'une unité de récupération de gaz méthane (8/16) pour récupérer du gaz méthane à partir de l'effluent liquide, l'unité de récupération de gaz méthane comprenant une entrée (7/11) pour l'effluent liquide, laquelle entrée (7/11) est en communication de fluide avec les moyens de prélèvement d'effluent, l'unité de récupération de gaz méthane comprenant en outre une sortie (10/19) pour une phase gazeuse comportant du méthane, et une sortie (9/18) pour un effluent liquide, système dans lequel les moyens de prélèvement d'effluent comprennent des canaux de collecte (2), les canaux (2) ayant des ouvertures (e, f) pour introduire l'effluent liquide dans les canaux de collecte (2), et une sortie (d) pour l'effluent liquide, laquelle sortie est en communication de fluide avec l'unité de récupération de méthane, les canaux de collecte (2) comprenant une entrée pour une phase gazeuse, laquelle entrée peut être une ou plusieurs ouvertures pour l'effluent liquide (e, f) ou une entrée (c) séparée, sachant que le système de réacteur présente une conduite entre la sortie pour le biogaz produit dans le réacteur et l'unité de production d'énergie à partir de méthane, laquelle conduite comporte un débitmètre de gaz, et sachant que le système de réacteur comprend une conduite pour transporter la phase gazeuse de l'unité de récupération de gaz méthane à l'unité de production d'énergie à partir de méthane, laquelle conduite comporte un débitmètre de gaz.

2. Système de réacteur selon la revendication 1, dans lequel la sortie (10/19) pour une phase gazeuse de l'unité de récupération de gaz méthane et la sortie de gaz (40) pour le biogaz sont adaptées pour être en communication de fluide avec une unité (23) de production d'énergie à partir de méthane.

3. Système de réacteur selon la revendication 2, dans lequel une conduite (41) est prévue entre la sortie pour le biogaz, produit dans le réacteur anaérobie (1), et l'unité (23) de production d'énergie à partir de méthane, laquelle conduite (41) comprend un débitmètre de gaz et, de manière facultative, un détecteur de méthane.

4. Système de réacteur selon la revendication 2 ou 3, dans lequel une conduite (52/20) pour transporter une phase gazeuse est présente entre l'unité de récupération de gaz méthane (8/16) et l'unité (23) de production d'énergie à partir de méthane, laquelle conduite comprend un débitmètre de gaz et, de manière facultative, un détecteur de méthane.

5. Système de réacteur selon l'une quelconque des revendications 1 à 4, dans lequel l'unité de récupération de gaz méthane (8/16) comprend un dispositif sélectionné dans le groupe de dispositifs d'aération, de dispositifs de dégazage et de dispositifs d'extraction de gaz par le vide.

6. Système de réacteur selon l'une quelconque des revendications 1 à 5, dans lequel le réacteur est sélectionné dans le groupe de réacteurs anaérobies à flux ascendant à lit de boue (UASB), de réacteurs à lit de boue granulaire en expansion (EGSB), de réacteurs à circulation interne (IC), de réacteurs à lit fluidisé, de bioréacteurs anaérobies à membranes (MBR), de procédés de contact, de digesteurs infiniment mélangés, de réacteurs anaérobies à chicanes et de filtres anaérobies.

7. Système de réacteur selon la revendication 6, dans lequel le réacteur est un réacteur UASB.

8. Procédé de récupération de méthane à partir d'un effluent liquide d'un réacteur (1), selon lequel un flux de déchets, comportant une ou plusieurs substances organiques, a été soumis à un processus de dégradation anaérobie, lors duquel du biogaz de réacteur (1), contenant du méthane, a été produit à partir de ladite/desdites une ou plusieurs substances organiques, l'effluent liquide comportant du méthane dissous, le procédé comprenant le transfert du méthane dissous, de l'effluent à une phase gazeuse, et l'utilisation du méthane pour produire de l'énergie,
selon lequel l'effluent issu du réacteur (1) est envoyé dans un canal de collecte (2), le canal de collecte (2) comprenant de l'effluent liquide et une phase gazeuse, laquelle phase gazeuse comporte de l'air, le canal présentant des ouvertures (e/f) par lesquelles l'effluent liquide est introduit dans le canal de collecte (2) et est mis en contact avec la phase gazeuse, sachant que dans le canal de collecte le méthane est transféré de l'effluent à la phase gazeuse, et selon lequel la phase gazeuse comportant de l'air et du méthane est utilisée comme air de combustion pour brûler le biogaz obtenu à partir du processus de dégradation anaérobie, le procédé étant mis en oeuvre en utilisant un système de réacteur selon l'une quelconque des revendications 1 à 7.

9. Procédé selon la revendication 8, selon lequel la phase gazeuse et l'effluent, qui sont passés dans le canal de collecte (2), sont introduits dans un réservoir collecteur (3) dans lequel la phase gazeuse est séparée de l'effluent.

10. Procédé selon l'une quelconque des revendications 8 à 9, selon lequel l'effluent est introduit dans un dispositif de dégazage (8/16) dans lequel le méthane est séparé de l'effluent, au moyen de quoi le méthane est transféré de l'effluent liquide à la phase gazeuse.

11. Procédé selon l'une quelconque des revendications 8 à 10, selon lequel le transfert consiste à soumettre l'effluent liquide à une aération, en formant ainsi une phase gazeuse comportant de l'air et du méthane.

12. Procédé selon l'une quelconque des revendications 8 à 11, selon lequel la phase gazeuse, comportant de l'air et du méthane, qui est destinée à être utilisée comme air de combustion est introduite dans un réservoir d'admission d'air de combustion (30), ledit réservoir (30) comprenant en outre une entrée (31) pour l'air ambiant, entrée (31) par l'intermédiaire de laquelle l'air ambiant est introduit dans le réservoir d'admission d'air de combustion (30) à des instants où il n'y a pas suffisamment d'air de combustion qui est fourni par la phase gazeuse, comportant l'air et le méthane, pour brûler la totalité du biogaz devant être utilisé pour la production d'énergie, le réservoir (30) comprenant en outre une sortie (32) pour l'air de combustion, sortie par laquelle l'air de combustion est acheminé à une unité de combustion (23) dans laquelle le biogaz est brûlé, produisant ainsi de l'énergie.

13. Procédé selon l'une quelconque des revendications 8 à 12, selon lequel l'effluent est soumis à une extraction par le vide, au moyen de quoi le méthane est transféré de l'effluent à la phase gazeuse.

14. Procédé selon la revendication 12 ou 13, selon lequel la phase gazeuse comportant le méthane transféré est combinée avec du biogaz qui a été recueilli en tant que phase gazeuse à partir du réacteur et est ensuite utilisée pour la récupération d'énergie ou est brûlée à la torche.

15. Procédé selon l'une quelconque des revendications 8 à 14, selon lequel le réacteur est sélectionné dans le groupe de réacteurs anaérobies à flux ascendant à lit de boue (UASB), de réacteurs à lit de boue granulaire en expansion (EGSB), de réacteurs à circulation interne (IC), de réacteurs à lit fluidisé, de bioréacteurs anaérobies à membranes (MBR), de procédés de contact, de digesteurs infiniment mélangés, de réacteurs anaérobies à chicanes et de filtres anaérobies.

16. Procédé selon l'une quelconque des revendications 8 à 15, selon lequel la teneur en eau de l'effluent liquide est d'au moins 90 % en poids.
